# EUROPEAN PATENT SPECIFICATION

(11) **EP 0 769 837 B1**
(45) Date of publication and mention of the grant of the patent: **16.08.2001**
(21) Application number: 96116431.6
(22) Date of filing: 14.10.1996
(51) Int. Cl.: H02J 7/00

(54) **Battery charging device and electric vehicle mounting the same**
Batterieladevorrichtung und elektrisches Fahrzeug damit
Dispositif de chargement de batterie et véhicules électriques équipés de ce dispositif

(30) Priority: 19.10.1995 JP 27087995
(43) Date of publication of application: 23.04.1997
(73) Proprietor: Hitachi, Ltd., Chiyoda-ku, Tokyo 101 (JP)
(72) Inventor: Miyazaki, Taizou, Hitachi-shi, Ibaraki 316 (JP); Masaki, Ryoso, Hitachi-shi, Ibaraki 319-14 (JP); Kaneko, Satoru, Urizuri-machi, Naka-gun, Ibaraki 319-21 (JP); Horiba, Tatsuo, Hitachi-shi, Ibaraki 316 (JP)
(74) Representative: Beetz & Partner Patentanwälte

(56) References cited:
- EP-A- 0 607 041
- EP-A- 0 665 627
- GB-A- 2 004 140
- US-A- 4 689 531
- US-A- 5 003 244

## Description

The present invention relates to a battery charging device for a plurality of battery groups connected in series across an electric load which preferably is an electric motor for driving an electic vehicle.

In the art it is well known that when a battery is charged by repeating charging and resting in a short interval, a quick battery charging can be realized with a large current without subjecting the battery to a large burden.

An example for a battery charging device employing that principle is disclosed in US-A-5 003 244 in which there is shown and described a battery charging apparatus that can charge a plurality of batteries to equal voltage levels. With that known device a plurality of battery chargers are assigned to a plurality of batteries and the charging voltages for respective battery groups are kept uniform to effect an overcharging protection.

By using the above mentioned pulse-like charging method the total time of the charging process may be shortened because a large current is allowed to flow through the batteries. Because of the charging rest period, however, it is necessary to momentarily flow a large current to compensate the rest period. Accordingly, it is indispensible to provide a battery charger which permits a large current supply and an electric circuit which permits to flow such a large current. Therefore, that pulse-like charging method poses the problem that the size of the charging circuit must be increased, since the size and weight of both the battery charger and of its electric circuit increase depending on the current increase.

Accordingly, it is an object of the present invention to provide a battery charging device of the type defined above which permits a quick charging of the associated batteries without increasing the size of a related charging circuit.

According to the present invention the said object is achieved by means of a battery charging device as defined in the appended claim 1; further developments of the invention are indicated in subclaims.

The main advantage of the present invention, the reduction of size and weight of the charging equipment is particularly important when the battery charging device is mounted on an electric vehicle but profit may be gained also in stationary installations.

A battery charging device according to the present invention which is to supply a plurality of battery groups electrically connected to each other and to an electric load which is driven by energy from the battery groups, comprises a plurality of battery charging units which charge the respective battery groups and a common battery charging control unit which is designed to perform in addition to charge mode operating function for the corresponding battery group at least one of rest mode operating function which causes to rest charging for the corresponding battery group and discharge mode operating function which causes to discharge electric power from the corresponding battery group, to control charging for the corresponding battery group while repeating at least two modes including the charging mode among the charging mode, rest mode and discharge mode in a predetermined time cycle and further to perform a mutual control of the respective charging units so that at least one battery group is placed in the rest mode in a predetermined sequence during the operation thereof.

For further explaining the present invention and its advantages reference is made to the accompanying drawings in which:
Fig. 1 is a diagram showing a first embodiment of a battery charging device according to the present invention and an electric vehicle mounting the same;
Fig. 2 is a schematic diagram showing an exemplary output of a time varibale signal generator in Fig. 1;
Figs.3A and 3B are waveform diagrams showing time dependent variable signals outputted from the signal generator shown in Fig.2 ;
Figs.4A through 4E are waveform diagrams showing exemplary battery charging currents according to the present invention ;
Figs.5A and 5B are waveform diagrams showing comparison between the battery charging currents according to the present invention and a conventional device ;
Fig.6 is a diagram showing another embodiment of an electric vehicle mounting the battery charging device according to the present invention and a fuel cell ; and
Fig.7 is a diagram showing still another embodiment of an electric vehicle mounting the battery charging device according to the present invention and an engine generator.

Hereinbelow, an embodiment according to the present invention which is applied to a battery charging device used for driving an electric vehicle is explained with reference to the drawings.

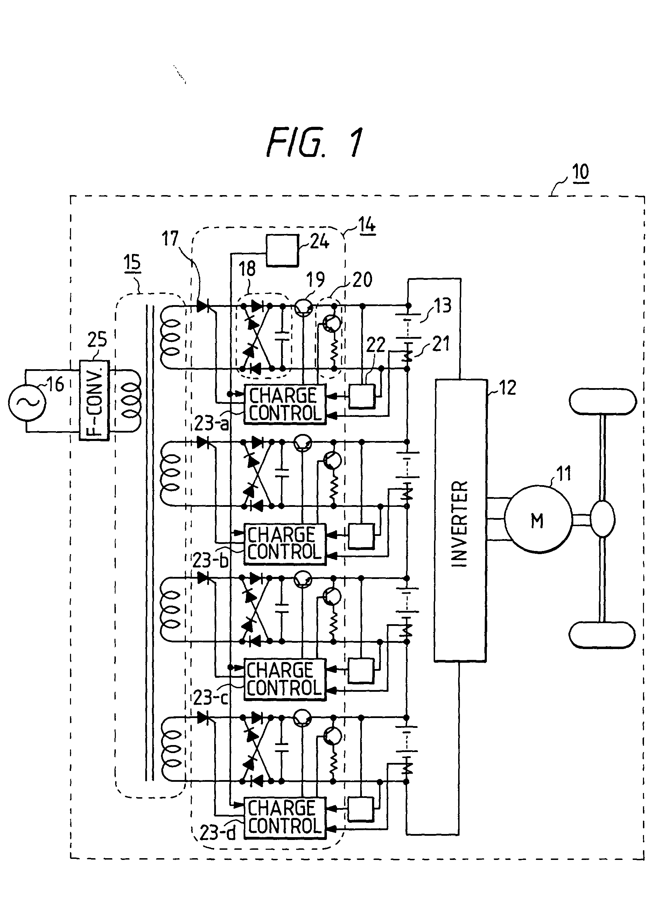

Fig.1 is a diagram showing schematically an electric vehicle and a battery charging system therefor according to the present invention.

In the drawing, numeral 10 represents an electric vehicle which includes a motor 11 for driving vehicle wheels, an inverter 12 for driving the motor 11, a plurality of battery groups 13 serving as a power source for driving the inverter 12, a battery charging unit 14 for charging the battery groups 13, a transformer means 15 which feeds an electric power to the battery charging unit 14 after boosting up the voltage applied thereto and an external AC power source 16 for suppling a primary current to the transformer means 15.

The battery charging unit 14 is constituted by change-over circuits 17 each of which is controlled by a charge controlling means which is explained later and performs connecting and disconnecting operation of the transformer means 15, rectifier circuits 18, charging voltage controlling circuits 19 each of which controls the charging voltage of the corresponding battery group 13 and discharge voltage control circuits 20. Numerals 21 are current sensors, numerals 22 are voltage detecting means, numerals 23-a, 23-b, 23-c and 23-d are charge controlling means, numeral 24 is a time dependent variable signal generating means and numeral 25 is a frequency converting means.

The electric vehicle 10 is driven by the motor 11 via the motive force thereof. The DC power from the respective battery groups 13 is converted via the converter 12 into an acceptable power for the motor 11. In the present embodiment each of the battery groups 13 is constituted by a plurality of batteries connected in series and four battery groups 13 are used, however, the number of battery groups 13 is not limited to four and the connection of these battery groups 13 is not limited to the series connection as illustrated.

During the battery charging operation, an AC power obtained from the external AC power source 16 is transformed by the transformer means 15 into a voltage appropriate for charging the respective battery groups 13. The transformer means 15 is customary realized by a transformer having a single pair of primary terminals and a plurality pair of secondary terminals. The electric power transformed by the transformer means 15 is controlled by the battery charging unit 14 to a voltage-current appropriate for charging the respective battery groups 13 and thereafter the batttery charging is performed. The transformer means 15 and the battery charging unit 14 are connected and disconnected via the change-over circuits 17. The AC power outputted from the transformer means 15 is rectified by the respective rectifier circuits 18, converted by the respective charge voltage controlling circuits 19 into a voltage appropriate for the charging and is charged for the respective battery groups 13.

The respective change-over circuits 17, the charge voltage controlling circuits 19 and the discharge voltage controlling circuits 20 are controlled by the respective corresponding charge controlling means 23-a, 23-b, 23-c and 23-d. Further, in order to monitor the internal conditions of the respective battery groups 13 the respective charge controlling means 23-a, 23-b, 23-c and 23-d intake the respective outputs from the current sensors 21 and the voltage detecting means 22. These intaken signals are used for performing a constant voltage charging or a constant current charging which will be explained later as well as are used for detecting a fully charged condition of the respective battery groups 13. For example, when a voltage for a certain battery group 13 exceeds a predetermined voltage, it is judged that the certain battery group 13 has reached to the fully charged condition. When a certain battery group 13 is judged to have reached to the fully charged condition, corresponding one of the charge controlling means 23-a, 23-b, 23-c and 23-d commands the corresponding change-over circuit 17 to disconnect the battery charging unit 14 from the transformer means 15.

In general, the charge voltage controlling circuit 19 performs either a constant voltage charging or a constant current charging depending on the charging condition of the corresponding battery group 13. For performing the constant voltage charging the charge voltage control circuit 19 is, for example, controlled through a chopping control, and further, for performing the constant current charging the charging voltage is controlled so as to flow a constant current through introducing a current control line which feeds back the output from the current sensors 21. It is sufficient to use customary circuits for these controls and which are also used for the control of the discharge voltage control circuit 20.

The time dependent variable signal generating means 24 transmits time reference signals to the battery charging unit 14. The charging to the respective battery groups 13 is performed while repeating charging, discharging and resting in a predetermined time cycle, therefore, the battery charging unit 14 necessitates the time reference signals. For this reason, in the present embodiment the battery charging unit 14 is provided with the time dependent variable signal generating means 14.

Further in the present embodiment, the change-over circuit 17 and the charge voltage controlling circuit 19 are realized by separate circuits for the safety reason, however, the charge voltage controlling circuit 19 can be used to serve also as the change-over circuit 17.

The circuit structural feature of the present invention resides in the fact that a plurality of batteries are divided into a plurality of groups and the plurality of battery groups are successively connected to the side of the battery charger in a time sharing manner so that the method employed in the present invention is called hereinbelow as "time sharing changing-over charging method".

The frequency converting means 25 works to convert the frequency of the AC power source serving as a charging power source into a high frequency. Since the size of a transformer can be, in general, reduced depending on the frequency thereof, in the present embodiment the frequency converting means 25 is provided which is formed by combining a customary converter and inverter.

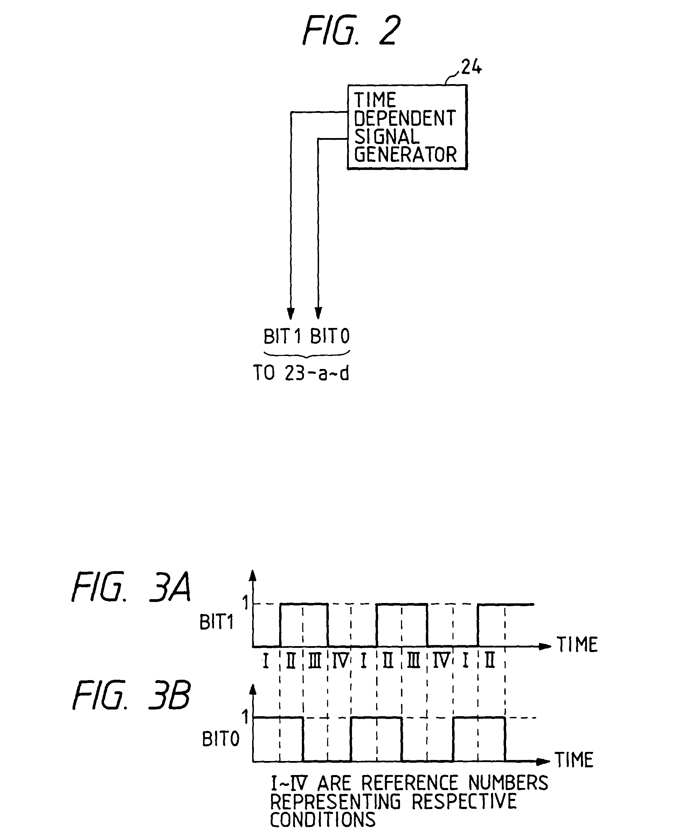

Hereinbelow, an exemplary operation of the charge control means 23-a, 23-b, 23-c and 23-d is explained with reference to Fig.2 and Table 1 below. Now, it is assumed that the battery charging method is a combination of a burp charging and a constant current charging. The burp charging is one of well known pulse charging methods having an improved charging efficiency in which a momentary battery discharging period is provided during changing-over from the charging period to the resting period. Further, it is assumed that in the burp charging method the charging period is equated with the resting period, the discharging period is extremely short in comparison with the charging period and the absolute value of the discharging current is substantially the same as that of the charging current.

Fig.2 shows an example of signals generated from the time dependent variable signal generating means 24 under the preconditions as explained above. In the present embodiment, the signals are realized by digital signals from two terminals as illustrated in Fig.2. The signals at the two terminals are respectively represented as bit 0 and bit 1 and are generated in a pattern as illustrated in Figs.3A and 3B. These signals are outputted to the four charge controlling means 23-a, 23-b, 23-c and 23-d as illustrated in Fig.1. In Table 1, four conditions I through IV which are determined depending on variation of these time dependent variable signals are defined. The charge control means 23-a, 23-b, 23-c and 23-d vary their operating conditions depending on the respective conditions as illustrated in Table 1.

**Table 1**

| Operation of Charge Controlling Means | | | | | |
|---|---|---|---|---|---|
| Operation of Time Dependent Variable Signal Generating Means 24 | bit 1 | 0 | 1 | 1 | 0 |
| | bit 0 | 1 | 0 | 1 | 0 |
| | condition | I | II | III | IV |
| Operation of Charge Controlling Means 23 | 23-a | Constant Current Charge Mode | Constant Current Charge Mode | Rest After Momentary Discharge Mode | Rest Mode |
| | 23-b | Rest Mode | Constant Current Charge Mode | Constant Current Charge Mode | Rest After Momentary Discharge Mode |
| | 23-c | Rest After Momentary Discharge Mode | Rest Mode | Constant Current Charge Mode | Constant Current Charge Mode |
| | 23-d | Constant Current Charge Mode | Rest After Momentary Discharge Mode | Rest Mode | Constant Current Charge Mode |

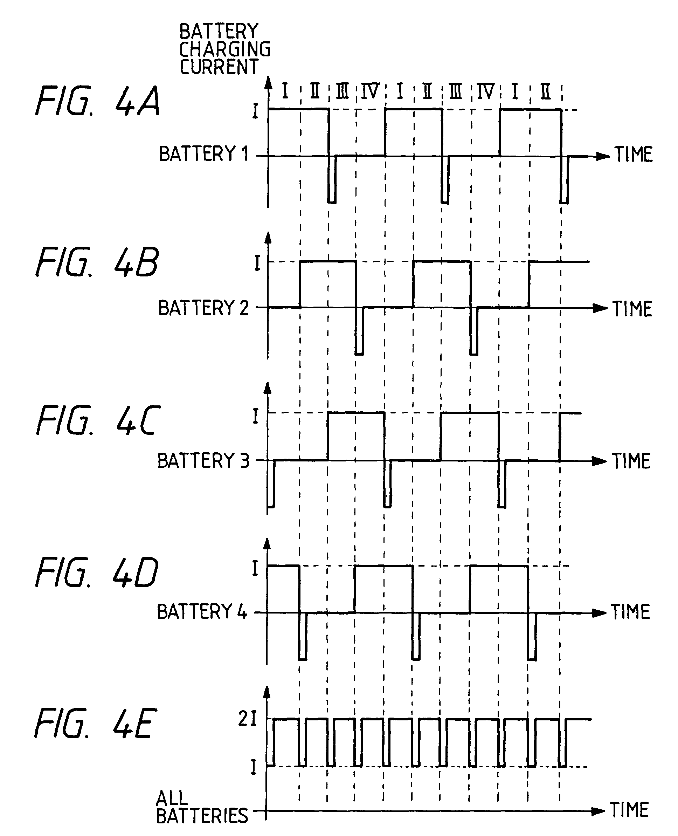

According to the operations in Table 1, the respective battery groups 13 are supplied of the currents as illustrated in Figs.4A through 4D. In each of these drawings abscissa indicates time, the ordinate indicates current to be flown through the respective battery groups 13 while representing the charging current direction as positive and the amount of charging current for every battery group 13 as I.

Figs.4A through 4D show that the battery groups 1 through 4 repeat charging and diacharging successively. The rest periods of the respective battery groups 1 through 4 are uniformly distributed along the time axis and one of four battery groups 1 through 4 is always placed either in the rest period and the momentary discharge period at respective operating conditions. When integrating all of the charging patterns as illustrated in Figs.4A through 4D, the charging current of about 2I except for the momentary discharge periods is flown for the entire battery groups 1 through 4 as illustrated in Fig.4E.

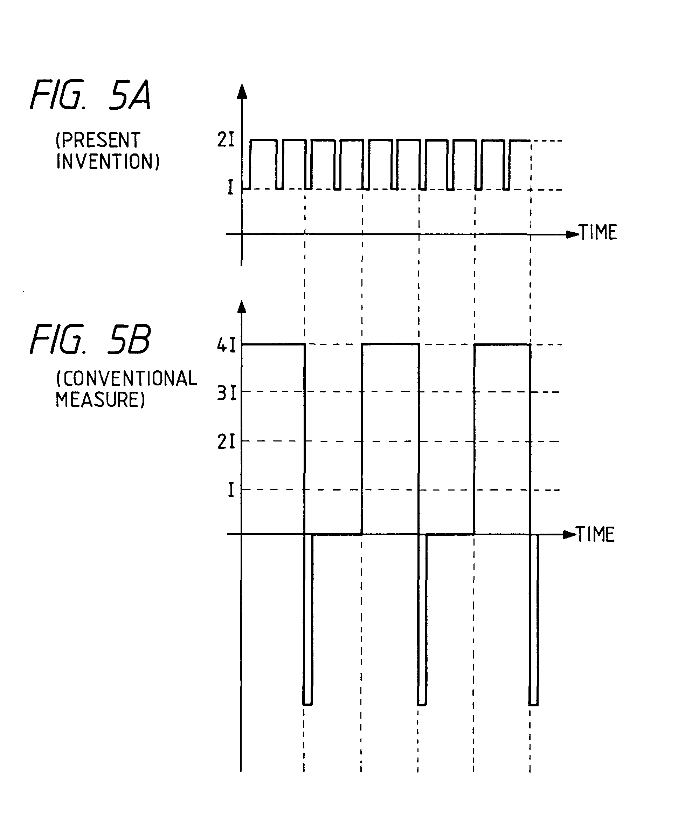

Fig.5A is a duplicate of Fig.4E. Fig.5B is a waveform of entire charging current according to a conventional constant current burp charging method with no provision of time sharing changing-over charging according to the present invention and is added for the purpose of comparison with the present invention and for explaining the advantages of the present invention.

When assuming battery charging efficiency is 100%, a charging quantity of a battery is generally expressed as ; ∫i dt, wherein i is charging current and t is time. When assuming the entire time for completing charging according to the charging method as shown in Fig.5A as T, the entire charging power is 2I×T, because the charging current for the entire battery groups 1 through 4 is taken as 2I when neglecting the discharged power in the momentary short period.

When the conventional constant current burp charging is performed for the entire battery groups, the charging current as illustrated in Fig.5B flows for the entire battery groups wherein the ratio between the charging period and the rest period is also assumed as 1:1. In this instance, if it is required to complete the charging in the same time T, it is necessary to flow a charging current of 4I as will be understood from Fig.5B.

In order to flow such a current which varies greatly with respect to time, it is primarily considered to introduce an inductor and a capacitor into a circuit concerned, however, in an electric vehicle which requires a large current it is required to introduce an extremely large inductor and capacitor which is unsuitable for a passenger car. For this reason, a battery charger having a sufficient capacity is required for the burp charging and the pulse like charging until now.

The size and weight of a battery charger and a circuit concerned generally increase depending on the current flowing therethrough, therefore, it will be understood that the present embodiment which requires a less current quantity is advantageous in order for reducing size and weight of an electric vehicle and a battery charger therefor.

For explaining principle and effectiveness of the present invention, a simple burp charging method and a constant current charging method are combined with the time sharing switching-over charging method according to the present invention, however, even if a further complexed charge control is employed, the time sharing changing-over charging method is more advantageous with respect to size reduction thereof in comparison with a conventional method. In the time sharing change-over charging method, the batteries are divided into a plurality of groups and during rest period for a certain battery groups another battery group is charged so that there exists no common rest period for the entire battery groups. For this reason, the instantaneous charging current of the time sharing change-over charging method according to the present invention is necessarily lessened in comparison with that of the pulse like charging method for the entire battery groups, therefore, if the charging time is designed identical the size of the battery charger using the time sharing changing-over charging method is reduced in comparison with that using the conventional method.

In the above embodiment, the time sharing change-over charging method using the burp charging method is explained, however, the time sharing changing-over can be likely performed in a pulse like charging method of which a momentary discharge period during charging is omitted for simplifying the structure thereof. Further, the charge controlling means 23 can be easily modified to perform a constant voltage control by making use of the output from the voltage detecting means 22.

As will be understood from the above, the time sharing changing-over charging method of the present embodiment according to the present invention realizes a pulse like charging and a burp charging which are suitable for quick charging without increasing the size of the battery charger concerned as well as reduces the size and weight of an electric vehicle mounting such battery charger permitting quick charging.

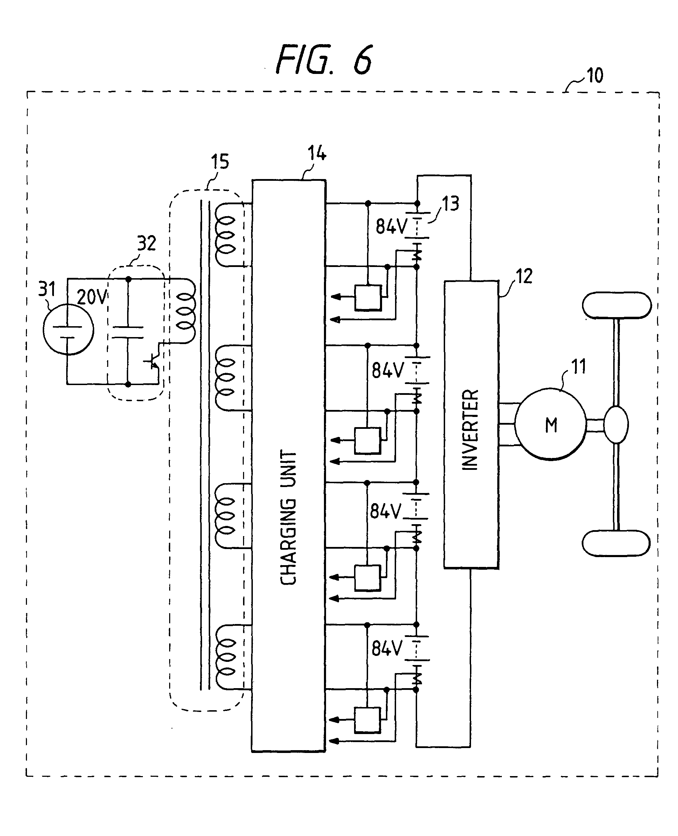

By making use of the features of the time-sharing changing-over charging method according to the present invention, an advantageous electric vehicle mounting a fuel cell is constituted. Fig.6 shows a constitutional diagram of an embodiment of an electric vehicle mounting a fuel cell according to the present invention.

In the present embodiment, numeral 31 represents a fuel cell and numeral 32 represents a DC-AC power conversion means. The electric power of the fuel cell 31 is converted into an AC power via the DC-AC power conversion means 32, transferred to the transformer means 15 and transformed there to a voltage suitable for charging the battery groups 13. In the present embodiment, the transformer means 15 is realized by a transformer having a primary winding and four secondary windings isolated from the primary winding. The output of the transformer means 15 is transferred to the battery charging unit 14 wherein the transferred output is converted to an appropriate voltage-current pattern for charging and is charged to the battery groups 13.

In the present embodiment, the output voltage of the fuel cell 31 is determined as 20V and the voltage for the electric vehicle driving lines is determined as 336V. Each of the respective battery groups 13 is constituted by seven batteries connected in series and four battery groups each having 84V are connected in series for establishing the electric vehicle driving line voltage of 336V.

The present embodiment relates to a hybrid power source type electric vehicle mounting on the electric vehicle 10 a fuel cell and batteries as its energy source. A fuel cell generally stores a large quantity of energy per unit weight, however, poorly follows up to a required instantaneous power fluctuation. This is because since the fuel of hydrogen and oxygen is supplied in a form of gas, it is difficult to momentarily control these gas flow rate so as to meet the required electric power generation. For this reason, it is inconvenient to use only a fuel cell for an electric vehicle as a main electric power supply source. Contrary, a battery can easily follow-up to a required instantaneous power fluctuation in comparison with a fuel cell, however, a storable energy quantity per unit weight of a battery is low. Accordingly, in the present embodiment, a major part of electric power is stored in the fuel cell 31 and the battery groups 13 are constantly charged by the electric power from the fuel cell 31. The power supply to the inverter 12 is performed via the battery groups 13, therefore, it is possible to meet a sudden large current requirement which may occur when the electric vehicle is required to climb an up-hill or is required to be suddenly accelerated.

Hereinbelow, an advantage when charging method according to the present invention is applied to the above explained hybrid power source type electric vehicle using the fuel cell is explained.

The battery groups 13 consume energy through the cruising of the electric vehicle 10. The battery groups 13 have to be charged quickly during cruising under a small load, for this reason, the above mentioned pulse like charging method and the burp charging method are suitable. However, if the batteries are all together subjected to the pulse like charging or the burp charging as in the conventional manner, the charging current suddenly varies as explained in connection with Fig.5B. A fuel cell can not meet such a sudden change of charging current as explained above. Therefore, it is difficult to use the pulse like charging or the burp charging which is understand to be advantageous for a quick charging.

However, according to the present invention, the instantaneous charging current is distributed by the changing-over operation, therefore, the charging current is kept substantially constant over the entire charging operation as shown in Fig.5A. The characteristic of the present invention is very convenient to supplement the drawback of an electric power storage means such as fuel cell which can poorly follow-up to an instantaneous electric power fluctuation.

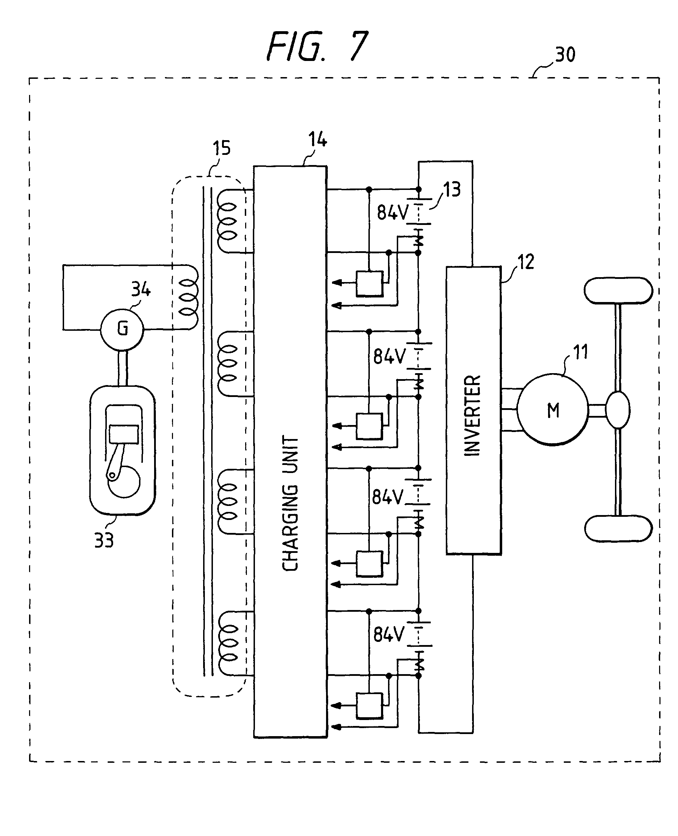

In the above, an embodiment in which the present invention is applied to an electric vehicle mounting a fuel cell. The battery charging device according to the present invention can also be applied to an engine-battery hybrid type electric vehicle. Fig.7 shows an embodiment of an engine-battery hybrid type electric vehicle to which the present invention is applied. In the present embodiment, numeral 30 represents an engine-battery hybrid electric vehicle, numeral 33 represents an engine and numeral 34 represents an electric generator. The engine 33 rotates the electric generator 34 and causes to output an electric power to the transformer means 15.

In the present embodiment, the batteries serve as an auxiliary power source which operates when a large current is momentarily required such as during acceleration and up-hill climbing. In order to reduce the size of an electric vehicle concerned it is preferable that the capacity of the batteries is limited to the minimum level as required and the batteries permit a quick charging in short time when the engine 33 has a surplus power.

Further, since the effeciency and the amount of the exhaust materials of a heat engine are greatly affected depending on the operating conditions thereof, it is preferable to operate the heat engine near at such as maximum efficiency operating point and minimum exhaust material point with substantially a constant speed.

In the present embodiment, the frequency converting means 25 as shown in Fig.1 embodiment is omitted. This is because the AC power frequency generated by the engine generator 34 is presumed sufficient high. For example, assuming that a normal rpm range of the internal combustion engine is 6000rpm and number of pole pairs of the engine generator 34 is 8, the frequency of the generated AC power is 800Hz, thereby the size of the transformer used in the present embodiment can be reduced sufficiently, because the operating frequency in the transformer is sufficiently high in comparison with the commercial frequency of 50Hz∼60Hz.

On the other hand, if an internal combusion engine which operates at a low rpm is used, the frequency of the generated AC power lowers to a level comparable to the commercial frequency to thereby increase the size of the transformer concerned. In such instance, it is advantageous to provide a frequency converting means 25 in order to reduce the size of a battery charger concerned.

With the present embodiment according to the present invention, the fluctuation of the electric power is very small even through the pulse like charging and the burp charging are used which are suitable for the quick charging, therefore, the engine operating condition can be kept substantially constant. Accordingly, an engine-battery hybrid electric vehicle of a desirable efficiency and having batteries of reduced weight can be properly designed.

According to the present invention, a battery charging unit is provided with a charge controlling unit which is designed to perform at least one of rest mode operating function which causes to rest charging for the respective battery groups and discharge mode operating function which causes to discharge electric power from the respective battery groups in addition to charge mode operating function for the respective battery groups, and performs a time sharing change-over charging operation in a manner to control charging for the respective battery groups while repeating at least two modes including the charging mode among the charging mode, rest mode and discharge mode in a predetermined time cycle and further to perform a mutual control between the respective battery groups so that at least one battery group is placed in the rest mode in a predetermined sequence during the operation thereof, thereby, an instantaneous current increase is suppressed even though a pulse like charging and burp charging are used which is suitable for a quick charging, and a battery charging device of reduced size which permits a quick charging can be provided.

Further, through the application of such battery charging device having a reduce size and permitting a quick charging for an electric vehicle, the size of the electric vehicle is also reduced.

## Claims

1. A battery charging device for a plurality of battery groups (13), which are connected in series across an electric load (11, 12), comprising
- a plurality of battery charging units (18, 19, 20), each being coupled to one of said plurality of battery groups (13) for charging the same and
- a common battery charging control unit (23a-d, 24) controlling said plurality of battery charging units (18, 19, 20),
characterised in
that said common battery charging control unit (23a-d, 24) effects a charging cycle including a series of charge mode, short discharge mode extending over a period which is extremely short in comparison with the period of said charging mode, and rest mode in a time sharing manner such that at least any one of said battery groups (13) is placed in said rest mode in every moment of the charging operation for said plurality of battery groups (13).

2. A battery charging device according to claim 1, wherein
- said charging control unit (23a-d, 24) controls the charging quantity for said respective battery groups (13) in dependence on the condition of charge thereof.

3. A battery charging device according to claim 1, characterised in that it further comprises a transformer (15) having a primary winding and a plurality of seondary windings and a changing-over means (17) designed to independently connect and disconnect the outputs of the respective secondary windings for the corresponding battery groups (13).

4. A battery charging device according to claim 3, characterised in that it further comprises a frequency converting means (25) disposed at the side of said primary winding of said transformer (15).

5. A battery charging device according to claim 1, characterised in that said electric load is an electric motor mounted on an electric vehicle for driving the same.

6. A battery charging device according to claim 1, characterised in that a fuel cell is provided for feeding the battery charging device and said electric load is an electric motor mounted on a fuel cell battery type electric vehicle for driving the same.

7. A battery charging device according to claim 1, characterised in that an engine generator is provided for feeding the battery charging device and said electric load is an electric motor mounted on an engine/battery hybrid type electric vehicle.

## Patentansprüche

1. Batterieladevorrichtung für eine Mehrzahl von Batteriegruppen (13), die in Serie zueinander mit einer elektrischen Last (11, 12) verbunden sind, mit einer Mehrzahl von Batterieladeeinheiten (18, 19, 20), von denen jede mit einer der Mehrzahl von Batteriegruppen (13) zu deren Aufladung gekoppelt ist,
und
einer gemeinsamen Batterieladekontrolleinheit (23a-d, 24) zum Steuern der Mehrzahl von Batterieladeeinheiten (18, 19, 20),
dadurch gekennzeichnet,
daß die gemeinsame Batterieladekontrolleinheit (23a-d, 24) einen Ladezyklus, der eine Abfolge aus Lademodus, Kurzentlademodus, der sich über eine Zeitdauer erstreckt, die im Vergleich zu der Zeitdauer des Lademodus extrem kurz ist, und Ruhemodus umfaßt, in einem solchen Time-Sharing-Betrieb bewirkt, daß sich in jedem Zeitpunkt des Ladevorgangs für die Mehrzahl von Batteriegruppen (13) wenigstens eine der Batteriegruppen (13) im Ruhemodus befindet.

2. Batterieladevorrichtung nach Anspruch 1, bei der
- die Ladekontrolleinheit (23a-d, 24) die Aufladungsmenge für die jeweiligen Batteriegruppen (13) in Abhängigkeit von deren Ladezustand steuert.

3. Batterieladevorrichtung nach Anspruch 1, dadurch gekennzeichnet,
daß sie außerdem einen Transformator (15) mit einer Primärwicklung und einer Mehrzahl von Sekundärwindungen und eine Umschalteinrichtung (17) aufweist, die so aufgebaut ist, daß sie die Ausgänge der jeweiligen Sekundärwicklungen für die entsprechenden Batteriegruppen (13) unabhängig anschließt und abtrennt.

4. Batterieladevorrichtung nach Anspruch 3, dadurch gekennzeichnet,
daß sie außerdem einen Frequenzumsetzer (25) aufweist, der auf der Seite der Primärwicklung des Transformators (15) angeordnet ist.

5. Batterieladevorrichtung nach Anspruch 1, dadurch gekennzeichnet,
daß die elektrische Last ein an einem Elektrofahrzeug zu dessen Antrieb montierter Elektromotor ist.

6. Batterieladevorrichtung nach Anspruch 1, dadurch gekennzeichnet,
daß zum Speisen der Batterieladeeinrichtung eine Brennstoffzelle vorgesehen und die elektrische Last ein Elektromotor ist, der an einem Elektrofahrzeug vom Brennstoffzellenbatterietyp zu dessen Antrieb montiert ist.

7. Batterieladevorrichtung nach Anspruch 1, dadurch gekennzeichnet,
daß zum Speisen der Batterieladevorrichtung eine Lichtmaschine vorgesehen und die elektrische Last ein Elektromotor ist, der an einem Elektrofahrzeug der Hybrid-Bauart mit Verbrennungsmotor und Batterie montiert ist.

## Revendications

1. Dispositif de chargement de batteries destiné à une pluralité de groupes de batteries (13), qui sont reliés en série à une charge électrique (11, 12), comprenant
- une pluralité d'unités de chargement de batteries (18, 19, 20), reliées chacune à l'un des groupes de ladite pluralité de groupes de batteries (13) afin de le charger, et
- une unité commune de contrôle du chargement des batteries (23a-d, 24) contrôlant ladite pluralité d'unités de chargement de batteries (18, 19, 20),
caractérisé en ce que
ladite unité commune de contrôle du chargement des batteries (23a-d, 24) effectue un cycle de chargement incluant une série de modes parmi lesquels un mode charge, un mode décharge courte s'étendant sur une période extrêmement courte par comparaison avec la période dudit mode charge, et un mode repos, d'une manière partagée, de manière à ce qu'au moins l'un quelconque desdits groupes de batteries (13) soit placé dans ledit mode repos pendant l'opération de chargement, pour ladite pluralité de groupes de batteries (13).

2. Dispositif de chargement de batteries selon la revendication 1, dans lequel :
- ladite unité de contrôle du chargement (23a-d, 24) contrôle la charge pour lesdits groupes de batteries (13) respectifs en fonction de leur état de charge.

3. Dispositif de chargement de batteries selon la revendication 1, caractérisé en ce qu'il comprend en outre un transformateur (15) comportant un enroulement primaire et une pluralité d'enroulements secondaires et des moyens de commutation (17) conçus pour connecter et déconnecter d'une manière indépendante les sorties des enroulements secondaires respectifs pour les groupes de batteries (13) correspondants.

4. Dispositif de chargement de batteries selon la revendication 3, caractérisé en ce qu'il comprend en outre des moyens de conversion de fréquence (25) disposés du côté dudit enroulement primaire dudit transformateur (15).

5. Dispositif de chargement de batteries selon la revendication 1, caractérisé en ce que ladite charge électrique est un moteur électrique monté sur un véhicule électrique pour l'entraîner.

6. Dispositif de chargement de batteries selon la revendication 1, caractérisé en ce qu'une pile à combustible est prévue pour alimenter le dispositif de chargement de batteries et ladite charge électrique est un moteur électrique monté sur un véhicule électrique du type batterie et pile à combustible pour l'entraîner.

7. Dispositif de chargement de batteries selon la revendication 1, caractérisé en ce qu'un générateur moteur est prévu pour alimenter le dispositif de chargement de batteries et ladite charge électrique est un moteur électrique monté sur un véhicule électrique du type hybride à moteur/batterie.
